# EUROPÄISCHE PATENTSCHRIFT

(11) **EP 3 808 076 B1**
(45) Veröffentlichungstag und Bekanntmachung des Hinweises auf die Patenterteilung: **30.07.2025**
(21) Anmeldenummer: 19739200.4
(22) Anmeldetag: 18.06.2019
(51) Int. Cl.: H04N 7/18, A01K 1/00, A01K 5/00, A01K 11/00, E06B 7/32, G08B 3/00

(54) **VORRICHTUNG ZUR IDENTIFIZIERUNG EINES TIERES**
APPARATUS FOR IDENTIFYING AN ANIMAL
DISPOSITIF POUR IDENTIFIER UN ANIMAL

(30) Priorität: 18.06.2018 AT 504852018
(43) Veröffentlichungstag der Anmeldung: 21.04.2021
(73) Patentinhaber: Ramseier Coatings AG, 3113 Rubigen (CH)
(72) Erfinder: BERNDORFER, Wolfgang, 4723 Natternbach (AT); HOFMANN, Jürg, 3113 Rubigen (CH)
(74) Vertreter: Burgstaller, Peter
(86) Internationale Anmeldenummer: PCT/EP2019/066083
(87) Internationale Veröffentlichungsnummer: WO 2019/243361

(56) Entgegenhaltungen:
- DE-A1- 102014 101 167
- DE-U1- 202005 014 531
- DE-U1- 202008 000 934
- KR-A- 20030 037 910
- US-A1- 2008 282 988
- US-A1- 2010 332 140
- US-A1- 2015 022 666
- US-A1- 2015 216 145
- US-A1- 2016 255 807
- US-A1- 2017 273 277
- US-B1- 6 297 739

## Beschreibung

Die im Folgenden beschriebene Erfindung betrifft eine Vorrichtung zum Identifizieren eines ersten Tieres, welche Vorrichtung mit einer Steuereinheit zur Betätigung eines Antriebes zum Öffnen und/oder Schließen einer Türe sowie zur Ausgabe eines Tons durch eine Tonausgabeeinheit gekoppelt ist.

US2756466 offenbart eine Tiertüre, welche Tiertüre ein Teil einer üblichen, für Personen gedachten Türe ist. Es findet sich in US2756466 kein Hinweis auf einen Antrieb zum Öffnen und/oder Schließen der Türe in Abhängigkeit der Anwesenheit eines Tieres oder der Ausgabe eines Signals in Abhängigkeit der Anwesenheit eines Tieres.

WO2009128870 hat eine Tierklappe zum Inhalt. Es findet sich in WO2009128870 kein Hinweis auf einen Antrieb zum Öffnen oder Schließen der Tierklappe sowie eine Steuerung dieses Antriebes. Ebenso umfasst die in WO2009128870 beschriebene Vorrichtung keine Vorrichtung zur Ausgabe eines Signals in Abhängigkeit der Anwesenheit eines Tieres.

US5992096 beschreibt eine Tierklappe umfassend eine Detektionseinheit, welche Detektionseinheit ein anwesendes Tier detektiert, und eine Leseeinheit zum Auslesen einer ID des Tieres. Die Vorrichtung gemäß US5992096 verriegelt oder entsperrt die Tierklappe in Abhängigkeit der ausgelesenen ID.

DE202008000934 erwähnt eine Vorrichtung zum Öffnen einer Türe in Abhängigkeit einer ausgelesenen ID eines sich der Türe nähernden Tieres.

DE19708262 offenbart ein in eine Türöffnung einsetzbares Türelement, welches Türelement versperrbar oder verriegelbar ist.

DE202005014531 beschriebt ein automatisch betätigtes Tor, welches Tor mittels einer Steuerung in Abhängigkeit eines ausgelesenen Codes geöffnet wird. Die in DE202005014531 beschriebene Vorrichtung basiert auf der RFID-Technologie.

US6560926 beschreibt eine Tiertüre, die durch einen Benutzer fernsteuerbar ist.

US2006101738A1 beschreibt eine Tiertüre umfassend keine Steuerung oder einen Antrieb zum Öffnen dieser.

EP2484856 beschreibt eine Tiertüre, welche sich durch gute wärmetechnische Eigenschaften auszeichnet. Weiters ist in EP2484856 eine Möglichkeit des Erkennens von Tieren aufgezeigt, welche sich im Wesentlichen dadurch auszeichnet, dass nur Teile des Codes lesbar sein müssen.

US20080036611, US6297739B1 und DE102014101167A1 offenbaren nicht den Abgleich von Bildern über die Annäherung des Tieres an die erfindungsgemäße Vorrichtung mit Referenzbildern.

US20160255807 offenbart eine Vorrichtung zur Gewährung einer Zutrittskontrolle für ein Tier, wobei eine Person über die Gewährung des Zutrittes entscheidet (siehe US20160255807 [0023]).

KR20030037910 offenbart ein Verfahren zur Detektion einer Bewegung eines Tieres. Das in KR20030037910 offenbarte Verfahren ist ungeeignet, um ein erstes Tier von einem zweiten Tier zu unterscheiden. Dies ist auch weder die Aufgabe von KR20030037910 noch kann diese Aufgabe aus KR20030037910 abgleitet werden, weshalb die erforderlichen Schritte zur Identifikation aus KR20030037910 nicht entnommen werden können.

US6297739 offenbart ein Verfahren und eine Vorrichtung zu einer automatischen Gewährung einer Zutrittskontrolle, wobei die automatisch generierte Entscheidung über das Auslesen eines ID-Tags und einen Abgleich dieses erfolgt. Dieser Entscheidungsprozess kann in Abhängigkeit einer Detektion einer Bewegung und/oder eines Gewichtes imitiert werden.

US2017273277 offenbart eine Futterstation, bei welcher Türen in Abhängigkeit eines identifizierten Tiers geöffnet werden. US2017273277 offenbart keine Abfrage über Bilddaten und einen Drucksensor, ob das Tier eine Beute im Maul hält.

US2015022666 offenbart ein System und ein Verfahren für skalierbare Videocloudservices.

US2015216145 offenbart eine Vogelfutterstation mit einer ausschließlichen Futterausgabe an bestimmte Vögel.

DE10201401167 offenbart eine intelligente Katzenklappe basierend auf einer Bildverarbeitung.

Die oben angeführten Dokumente nach dem Stand der Technik offenbaren Vorrichtungen zum Öffnen einer Türe, um einem Tier nach dem Auslesen eines Codes und Abgleich des Codes mit einem Referenzcode Einlass zu gewähren. Das Auslesen eines Codes ist jedoch in der Praxis schwer umsetzbar, zumal dies bedingt, dass der gesamte Code oder - wie dies in EP2484856 offenbart ist - zumindest wesentliche Teile des Codes ausgelesen werden können.

Dennoch ist das Auslesen von Codes bei Tieren ein schwieriges Unterfangen, da dies bedingt, dass das Tier das den Code umfassende Speichermedium tatsächlich trägt und dass ein Kontakt zwischen dem Speichermedium und dem Lesegerät herstellbar ist. Aus diesem Grund ist nach Ansicht der Erfinder ein Abgleich von Codes nicht als primäres Entscheidungskriterium geeignet.

Die hier offenbarte Erfindung stellt sich die Aufgabe, die nach dem Stand der Technik bekannten Vorrichtungen zur Identifizierung von Tieren zu verbessern, um auf Basis der eindeutigen Identifizierung des Tieres eine Tierklappe zu öffnen oder ein Signal abzugeben.

Erfindungsgemäß wird dies durch den Anspruch 1 erreicht.

Eine Person und auch ein Tier identifiziert ein erstes Tier primär durch sein Aussehen. Die vorliegende Erfindung stellt sich der Aufgabe, diese aus der Natur bekannte primäre Identifikation eines ersten Tieres durch technische Mittel nachzuahmen.

Die erfindungsgemäße Vorrichtung zur Identifizierung eines Tieres umfasst
eine Bildaufnahmevorrichtung zur Aufnahme von Bildern eines in der Nähe der Vorrichtung befindlichen Tieres,
eine Datenbank, in welcher Datenbank Referenzbilder über das Aussehen eines ersten Tieres und/oder übliche Abläufe der Annäherung des ersten Tieres abgespeichert sind,
wobei ein Übereinstimmungsmaß zwischen den Bildern und den Referenzbildern und/oder zwischen Merkmalen der Bilder und Merkmalen der Referenzbilder bestimmt wird und wobei in Abhängigkeit des Übereinstimmungswertes über eine Steuervorrichtung ein Antrieb zum Öffnen einer Türe betätigt wird und/oder eine Signaleinheit zur Ausgabe eines Warntones oder eines Anlockgeräuschs aktiviert wird und/oder eine Ausgabeeinheit zur Ausgabe von Futter aktiviert wird.

Die Bildaufnahmevorrichtung kann eine Fotokamera oder eine Videokamera nach dem Stand der Technik sein. Es können auch Wärmebildkameras nach dem Stand der Technik eingesetzt werden.

Die Bilder und die Referenzbilder können Bilddaten umfassen, auf Basis welcher Bilddaten unter Anwendung von Methoden nach dem Stand der Technik Parameter wie die Form des ersten Tieres, die Farbe des ersten Tieres oder die überwiegende Farbe des ersten Tieres, das Muster des Felles des ersten Tieres, die Weise der Annäherung des Tieres ermittelt werden können. Anhand der Bilddaten können biometrische Daten, vorzugsweise charakteristische biometrische Daten des ersten Tieres ermittelt werden.

Es wird anhand eines oder vorzugsweise anhand mehrerer der oben beispielhaft angeführten Parameter ein Ähnlichkeitsmaß zu einem Referenzparameter berechnet.

Die Berechnung eines Ähnlichkeitsmaßes zwischen einem Bild und einem Referenzbild wird im Rahmen der Diskussion dieser Erfindung als äquivalent zu der Berechnung eines Ähnlichkeitsmaßes zwischen einem Parameter und einem Referenzparameter angesehen, zumal der Parameter und der Referenzparameter aus dem Bild beziehungsweise aus dem Referenzbild ermittelt werden.

Bei Überschreiten eines definierten Grenzwertes wird das in der Nähe der erfindungsgemäßen Vorrichtung befindliche Tier als ein erstes Tier erkannt, welchem ersten Tier die Anwesenheit im Bereich der erfindungsgemäßen Vorrichtung zu gestatten ist. Es kann in weiterer Folge dem ersten Tier ein Einlass durch eine eine Öffnung verschließende Türe gewährt werden, wozu die Türe zu entriegeln und/oder zu öffnen ist. Die erfindungsgemäße Vorrichtung kann zum Zweck des fortgesetzten Aufenthaltes des ersten Tieres in der Nähe der erfindungsgemäßen Vorrichtung ein Anlockgeräusch ausgeben. Ein Anlockgeräusch ist ein im Wesentlichen für das erste Tier angenehmer Ton.

Das Anlockgeräusch kann das Tier dazu verleiten, durch die geöffnete Türe zu gehen und/oder eine entriegelte Türe zu öffnen. Im Unterschied zu den nach dem Stand der Technik bekannten Vorrichtungen kann sich die erfindungsgemäße Vorrichtung hierdurch auszeichnen, da eine auf Basis eines ausgelesenen und abgeglichenen Codes geöffnete Türe keinesfalls das als erstes Tier identifizierte Tier dazu verleitet, durch diese Türe zu gehen.

Analog zu der Ausgabe eines Anlockgeräusches kann auch ein Futter abgegeben werden, um das erste Tier zum Durchschreiten der geöffneten Tierklappe oder zum Öffnen einer Tierklappe oder zum Verbleib bei der erfindungsgemäßen Vorrichtung zu animieren.

Die Ausgabe von Anlockgeräuschen und/oder die Ausgabe von Futter kann dazu verwendet werden, das Tier zu lehren, die entsperrte Türe zu öffnen und/oder durch die geöffnete Türe zu gehen. Die Ausgabe des Anlockgeräusches und die Ausgabe von Futter kann auch durch eine Person erfolgen.

Der Laie erkennt, dass das Anlockgeräusch oder das Futter vorzugsweise an der dem Aufenthaltsort des ersten Tieres gegenüberliegenden Seite der Tierklappe angeordnet sein kann, um das Tier zum Durchschreiten der Tierklappe zu animieren.

Bei Unterschreiten eines definierten Grenzwertes des Ähnlichkeitsmaßes kann das in der Nähe der erfindungsgemäßen Vorrichtung befindliche Tier als ein zweites Tier erkannt werden.

Ein Tier kann auch als ein zweites Tier erkannt werden, wenn das eigentlich als erstes Tier zu bewertende Tier einen unerwünschten Gegenstand wie beispielsweise eine erlegte Maus mit sich bringt oder beispielsweise verschmutzt ist. Die erfindungsgemäße Vorrichtung kann sohin verhindern, dass ein Tier mit einer Beute im Maul durch die Tierklappe gelangt und diese Beute mit nach Hause bringt. Ein Tier mit einer Beute kann dadurch erkannt werden, dass das Tier mitsamt der Beute eine zu einer Referenzform und/oder zu einer Referenzfarbe und/oder zu Referenzbildwerten überhaupt unterschiedliche Form beziehungsweise Farbe beziehungsweise Bildwerte aufweist.

Ebenso kann verhindert werden, dass ein stark verschmutztes Tier in das Haus gelangt, da ein verschmutztes Tier unterschiedliche Farbwerte aufweist.

Es kann ein Warnton ausgegeben werden, welcher das zweite Tier zum Verlassen des Bereiches um die erfindungsgemäße Vorrichtung und gegebenenfalls zum Nichtdurchschreiten der Tierklappe anregt.

Der Fachmann wählt den Grenzwert des Ähnlichkeitsmaßes nach seiner Erfahrung und den technischen Möglichkeiten der Identifizierung des Tieres.

Mithilfe der Bildaufnahmevorrichtung kann auch bestimmt werden, wie sich das Tier der erfindungsgemäßen Vorrichtung und sohin der Tierklappe nähert. Unter Anwendung der gängigen Lehre kann die Trajektorie aufgezeichnet werden, mittels welcher Trajektorie sich das Tier der erfindungsgemäßen Vorrichtung nähert. Diese Trajektorie kann mit einer Referenztrajektorie abgeglichen werden, sodass unter der Annahme, dass jedes Tier seine charakteristische Form der Annäherung an eine Tierklappe hat, das Tier identifiziert werden kann.

Die Bildaufnahmevorrichtung kann auch zum Auslesen eines am Tier angebrachten Codes über die Bilddaten verwendet werden. Ein solcher visuell auslesbarer Code wie beispielsweise ein Strichcode, QR-Code kann zur Identifizierung des Tieres mit in einer Datenbank abgespeicherten Codes abgeglichen werden.

Die erfindungsgemäße Vorrichtung kann sich dadurch auszeichnen, dass die Vorrichtung Drucksensoren umfasst, welche Drucksensoren in einem Bereich angeordnet sind, welchen Bereich das Tier bei einer Annäherung an die Vorrichtung und/oder an die Türe betritt.

Mittels der Drucksensoren wird das Gewicht und/oder die charakteristische Gangart des Tieres bestimmt. Die Bestimmung des Gewichtes erlaubt auch das Erkennen, ob das Tier eine Beute und sohin ein zusätzliches Gewicht mit sich trägt.

Der Fachmann kann die Drucksensoren als ein Mittel zur Verifikation der Identifikation nach den oben angeführten Methoden vorsehen. Die Offenbarung der Erfindung schließt nicht aus, dass die Drucksensoren als ein einfaches Mittel zur Identifizierung des Tieres unabhängig von sonstigen Messmethoden eingesetzt werden können.

Die erfindungsgemäße Vorrichtung kann auch ein Lesegerät zum Auslesen eines Codes umfassen, welcher Code in einem am Tier befestigten Speichermedium gespeichert ist.

Es kann ein einem Tier zugeordneter, abgespeicherter Code mittels Verfahren nach dem Stand der Technik ausgelesen und mit einem Referenzcode abgeglichen werden. Das Auslesen von gespeicherten Codes kann zur Verifizierung von anderen Methoden zur Identifizierung des Tieres eingesetzt werden. Die Vorrichtung kann einen Geruchssensor zur Bestimmung eines Geruches des ersten Tieres umfassen, wobei der Geruch des ersten Tieres mit einem in Form von Referenzdaten abgespeicherten Referenzgeruch abgeglichen wird.

Nach der gängigen Lehre erkennen sich Tiere auch über den Geruch. Nach dem Stand der Technik ist es möglich, einen Geruch mittels technischer Messmethoden zu ermitteln. Über die Ermittlung des Geruches ist es möglich, neben dem Geruch des Tieres auch einen weiteren Geruch eines erlegten Tieres, welches das Tier im Maul trägt, zu ermitteln und so das erlegte Tier als ein zweites Tier zu identifizieren.

Der Einsatz von Geruchssensoren kann dazu dienen, eine mittels anderer technischer Messmethoden vorgenommene Identifizierung eines Tieres zu verifizieren. Dies impliziert die Kombination der Messmethoden.

Die Vorrichtung kann einen baulich abgeschlossenen Raum umfassen, durch welchen Raum die Ermittlung der Gerüche durch Geruchssensoren erleichtert wird, da die Vielzahl der messbaren Gerüche reduziert wird.

Die Offenbarung der Erfindung schließt nicht aus, dass Geruchssensoren als einfache Messmittel zur Identifizierung des Tieres unabhängig von sonstigen Messmethoden eingesetzt werden können.

Die oben angeführten Methoden zur Identifizierung eines Tieres basieren im Allgemeinen darauf, dass ein aktueller Messwert eines Tieres ermittelt wird, welcher mit einem Referenzmesswert abgeglichen wird. Der aktuelle Messwert und der Referenzwert können ein Bildwert oder ein aus dem Bildwert ermittelbarer Parameter wie eine Trajektorie, eine Form oder ein Farbwert, ein durch einen Drucksensor ermittelbarer Wert, ein Code oder ein Geruchswert sein.

Um die Zuverlässigkeit der erfindungsgemäßen Vorrichtung und des damit durchführbaren Verfahrens zu gewährleisten, ist eine stetig stattfindende Veränderung des Tieres beziehungsweise von dessen Angewohnheiten zu berücksichtigen. Das Verfahren kann selbstlernende Routinen umfassen. Es können die Messwerte, welche ein vom Fachmann definiertes Mindestmaß eines Ähnlichkeitsmaßes zu den Referenzwerten aufweisen, in der Datenbank als Referenzwerte abgespeichert werden. Hierdurch wird die Datenbank der Referenzwerte laufend erweitert, was auch den Effekt hat, dass Veränderungen des Tieres berücksichtigt werden.

Die Vorrichtung kann eine Sperrvorrichtung zum Versperren der Türe umfassen.

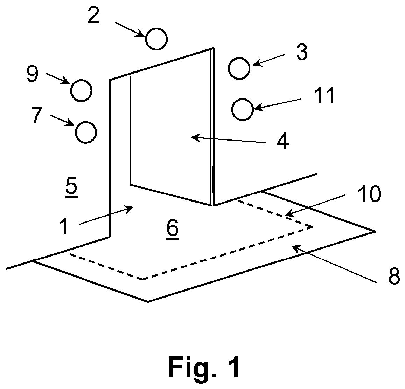

Der Gegenstand der Erfindung ist in der nachstehenden Figur 1 dargestellt, wobei die folgenden Bezugszeichen die nachstehenden Elemente kennzeichnen.
- 1: Öffnung
- 2: Kamera
- 3: Signaleinheit zur Ausgabe eines Warntons
- 4: Türe
- 5: Wand
- 6: Drucksensor
- 7: Geruchssensor
- 8: Bereich
- 9: Signaleinheit zur Ausgabe eines Anlocksignals
- 10: Grenze
- 11: Lesegerät

Figur 1 zeigt eine mögliche Ausführungsform der erfindungsgemäßen Vorrichtung, welche Vorrichtung bei einer Öffnung 1 in einer Wand 5 Anwendung findet, wobei die Öffnung 1 durch eine Türe 4 verschließbar ist. Die Anordnung der Türe 4 in der Öffnung 1 der Wand 5 entspricht dem Stand der Technik.

Der Gegenstand der hier offenbarten Erfindung und die Diskussion der Erfindung betrifft vorrangig eine Vorrichtung zur Identifizierung eines Tieres, sodass ein identifiziertes Tier durch die Öffnung 1 gelockt und/oder gelassen oder abgewiesen werden kann.

Die in Figur 1 dargestellte Ausführungsform umfasst eine Kamera 2, welche Kamera 2 als eine Bildaufnahmevorrichtung zur Aufnahme von Bildern eines in der Nähe der Vorrichtung befindlichen Tieres dient. Der Bereich 8 der Nähe wird vom Fachmann durch den Aufnahmebereich der Kamera 2 definiert. Der Fachmann kann die Neigung der Kamera 2 so ausrichten und den Fokus der Kamera 2 so wählen, dass mittels der Kamera 2 Bilddaten von einem eindeutig und klar definierten Bereich 8 um die Öffnung 1 erzeugt werden. Der Bereich 8 ist durch seine Grenze 10 und durch die Wand 5 klar begrenzt. Die Grenze 10 kann durch den Bildbereich der Kamera 2 und/oder durch den Fokusbereich der Kamera 2 definiert werden.

Die erfindungsgemäße Vorrichtung umfasst weiters eine Datenbank, in welcher Datenbank Referenzbilder über das Aussehen eines ersten Tieres und/oder übliche Abläufe der Annäherung des ersten Tieres abgespeichert sind.

Die in Figur 1 nicht dargestellte Datenbank umfasst beispielsweise Referenzbilddaten über das in Figur 1 ebenso nicht dargestellte Haustier, welches Haustier üblicher Weise durch die Öffnung 1 gelassen werden soll. Die Bilddaten umfassen Ansichten des Haustieres von der Seite, mit welcher Seite sich das Haustier der Kamera 2 nähert. Die Bilddaten des Haustieres können mit der Kamera 2 der erfindungsgemäßen Vorrichtung erstellt werden.

Die Datenbank kann weiters Referenzbilddaten und von letzteren abgeleitete Daten wie Trajektorien, Vektoren und dergleichen über übliche Abläufe der Annäherung des Haustieres zu der Öffnung 1 umfassen.

Mittels Verfahren nach dem Stand der Technik wird ein Übereinstimmungsmaß zwischen den mittels der Kamera 2 in Echtzeit ermittelten Bildern oder Bilddaten und den Referenzbildern beziehungsweise Referenzbilddaten ermittelt. Das Übereinstimmungsmaß gibt durch einen Zahlenwert die Ähnlichkeit zwischen dem Bild oder den hieraus abgeleiteten Bilddaten und dem Referenzbild beziehungsweise den daraus abgeleiteten Referenzbilddaten an. Derartige Verfahren zum Abgleich eines Bildes oder hieraus abgeleiteten Bilddaten mit einem Referenzbild beziehungsweise Referenzbilddaten sind nach dem Stand der Technik bekannt.

In Abhängigkeit des Übereinstimmungsmaßes wird über eine Steuervorrichtung ein Antrieb zum Öffnen einer Tierklappe betätigt und/oder eine Signaleinheit zur Ausgabe eines Warntones 3 oder eine Signaleinheit zur Ausgabe eines Anlockgeräusches 9 aktiviert und/oder eine Ausgabeeinheit zur Ausgabe von Futter aktiviert.

Das Übereinstimmungsmaß kann zur Durchführung der oben angeführten Aktionen einen Grenzwert erfüllen oder diesen Grenzwert übersteigen.

Die in Figur 1 dargestellte Vorrichtung umfasst Drucksensoren 6,
welche Drucksensoren 6 in einem Bereich 8 angeordnet sind, welchen Bereich 8 das Tier bei einer Annäherung an die Vorrichtung und/oder an die Türe 4 betritt. Das in Figur 1 gezeigte Ausführungsbeispiel betrifft den Sonderfall, dass der durch die Kamera 2 überwachte Bereich 8 und der Bereich 8, in welchem die Drucksensoren 6 angeordnet sind, deckungsgleich sind.

Mittels der Drucksensoren 6 kann die Kamera 2 aktiviert werden.

Mittels der Drucksensoren 6 wird weiters das Gewicht des den Bereich 8 betretenden Tieres 2 bestimmt und das mittels der Drucksensoren 6 ermittelte Gewicht zur Identifizierung des Tieres mit einem in der Datenbank abgespeicherten Referenzgewicht abgeglichen werden.

Die Vorrichtung umfasst ein Lesegerät 11 zum Auslesen eines Codes, welcher Code in einem am Tier befestigten Speichermedium gespeichert ist. Codes in Form von ID-Tags sind beispielsweise bei Hunden zur Identifizierung von Hunden Stand der Technik, wobei das Tier einen auf einem Chip gespeicherten Code mit sich trägt. Der Code ist mittels Geräten nach dem Stand der Technik auslesbar, sodass der Code als ein weiteres Kriterium zur Identifizierung des Tieres herangezogen werden kann.

Das Auslesen eines Codes kann in Abhängigkeit der Länge des Codes und des angewandten Verfahrens eine längere Zeitdauer andauern. Vorteilhaft wird der Code derart als ein weiteres Kriterium zur Identifizierung des Tieres verwendet, dass nur Teile des Codes ausgelesen werden.

Die erfindungsgemäße Vorrichtung umfasst einen Geruchssensor 7 zur Bestimmung eines Geruches des ersten Tieres, wobei der Geruch des ersten Tieres mit einem in Form von Referenzdaten abgespeicherten Referenzgeruch abgeglichen wird und so ein weiteres Kriterium zur Identifizierung des Tieres vorhanden ist. Ein Geruchssensor 7 ist nach dem Stand der Technik bekannt.

## Patentansprüche

1. Vorrichtung zur Bestimmung, ob eine Tür für ein Tier geöffnet wird, umfassend eine Bildaufnahmevorrichtung zur Aufnahme von Bildern eines Annäherungsvorganges eines in der Nähe der Vorrichtung befindlichen Tieres, welcher Annäherungsvorgang eine Trajektorie umfasst,
Drucksensoren (6) zur Ermittlung eines Gewicht des Tiers,
welche Drucksensoren (6) in einem Bereich (8) angeordnet sind, welchen Bereich (8) das Tier bei einer Annäherung an die Vorrichtung und/oder an die Türe (4) betritt,
**dadurch gekennzeichnet, dass**
die erfindungsgemäße Vorrichtung eine Datenbank umfasst, in welcher Datenbank Referenzbilder über übliche Abläufe der Annäherung des Tieres, Referenzbildern mit einer Referenztrajektorie mit charakteristischen Annäherungsvorgängen des Tieres und ein Referenzgewicht des Tieres abgespeichert sind,
wobei eine Steuerungseinheit mit der Datenbank und der Bildaufnahmevorrichtung verbunden ist, wobei die Steuerungseinheit ein Übereinstimmungsmaß zwischen der Trajektorie und der Referenztrajektorie und/oder zwischen Merkmalen der Bilder und Referenzmerkmalen der Referenzbilder bestimmt wird und
wobei in Abhängigkeit des Übereinstimmungsmaßes über eine Steuervorrichtung ein Antrieb zum Öffnen einer Türe (4) betätigt wird,
wobei der Antrieb zum Öffnen der Türe nur angesteuert wird, wenn das Tier als ein Tier ohne eine Beute im Maul identifiziert wird,
wobei die Steuerungseinheit weiters durch einen Vergleich des gemessenen Gewichtes mit einem Referenzgewicht zur Ermittlung ausgebildet ist, ob ein Tier eine Beute im Maul trägt.

2. Vorrichtung nach Anspruch 1, **dadurch gekennzeichnet, dass** Merkmale der Bilder beziehungsweise die Referenzmerkmale der Referenzbilder die Form des Tieres und/oder die Farbe des Tieres und/oder die vorherrschende Farbe des Tieres und/oder das Muster des Felles umfassen.

3. Vorrichtung nach einem der Ansprüche 1 bis 2, **dadurch gekennzeichnet, dass**
die Vorrichtung ein Lesegerät (11) zum Auslesen eines Codes umfasst, welcher Code in einem am Tier befestigten Speichermedium gespeichert ist.

4. Vorrichtung nach einem der Ansprüche 1 bis 3, **dadurch gekennzeichnet, dass**
die Vorrichtung einen Geruchssensor (7) zur Bestimmung eines Geruches des ersten Tieres umfasst,
wobei der Geruch des ersten Tieres mit einem in Form von Referenzdaten abgespeicherten Referenzgeruch abgeglichen wird.

5. Vorrichtung nach einem der Ansprüche 1 bis 4, **dadurch gekennzeichnet, dass**
die Vorrichtung eine Sperrvorrichtung zum Versperren der Türe (4) umfasst.

## Claims

1. A device for determining whether a door for an animal is being opened, comprising an image recording device for recording images of an approaching procedure of an animal being in proximity to the device, which approaching procedure comprises a trajectory,
pressure sensors (6) for determining a weight of the animal,
which pressure sensors (6) are arranged in a zone (8), which zone (8) the animal enters when approaching the device and/or the door (4),
**characterised in that**
the inventive device comprises a database, in which database reference images of typical approaching processes of the animal, reference images with a reference trajectory with characteristic approaches of the animal and a reference weight of the animal are stored,
wherein a control unit is connected to the database and the image recording device,
wherein the control unit determines a degree of matching between the trajectory and the reference trajectory and/or between features of the images and reference features of the reference images, and wherein a drive for opening a door (4) is actuated via a control device depending on said degree of matching,
wherein the drive for opening the door (4) is only actuated when the animal is identified as an animal that is not carrying a capture in its mouth,
wherein the control unit is further formed by comparing the measured weight with a reference weight for determining whether an animal is carrying a capture in its mouth.

2. The device of claim 1, **characterised in that** features of the images and, respectively, the reference features of the reference images comprise the shape of the animal and/or the colour of the animal and/or the predominant colour of the animal and/or the pattern of its fur.

3. The device of any one of claims 1 and 2, **characterised in that**
the device comprises a reading device (11) for reading out a code, which code is stored in a storage medium attached to the animal.

4. The device of any one of claims 1 to 3, **characterised in that**
the device comprises a smell sensor (7) for determining a smell of the first animal,
wherein said smell of the first animal is matched with a reference smell stored in the form of reference data.

5. The device of any one of claims 1 to 4, **characterised in that**
the device comprises a locking device for locking the door (4).

## Revendications

1. Dispositif pour déterminer si une porte est ouverte pour un animal, comprenant un dispositif de prise de vues pour prendre des images d'un processus d'approche d'un animal, qui se trouve à proximité du dispositif, ledit processus d'approche comprenant une trajectoire,
des capteurs de pression (6) pour déterminer le poids de l'animal,
lesdits capteurs de pression (6) étant disposés dans une zone (8), dans laquelle l'animal entre lorsqu'il s'approche du dispositif et/ou de la porte (4),
**caractérisé en ce que**
le dispositif selon l'invention comprend une base de données, dans laquelle sont mémorisées des images de référence sur des déroulements habituels de l'approche de l'animal, des images de référence avec une trajectoire de référence avec des processus d'approche caractéristiques de l'animal et un poids de référence de l'animal,
une unité de commande étant connectée à la base de données et au dispositif de prise de vues, ladite unité de commande déterminant une mesure de conformité entre la trajectoire et la trajectoire de référence et/ou entre des caractéristiques des images et des caractéristiques de référence des images de référence et
un entraînement pour l'ouverture d'une porte (4) étant actionné en fonction de la mesure de conformité par l'intermédiaire d'un dispositif de commande,
l'entraînement pour l'ouverture de la porte n'étant commandé que si l'animal est identifié comme un animal sans proie dans la gueule,
l'unité de commande étant en outre conçue pour déterminer si un animal porte une proie dans sa gueule en comparant le poids mesuré à un poids de référence.

2. Dispositif selon la revendication 1, **caractérisé en ce que** les caractéristiques des images ou les caractéristiques de référence des images de référence comprennent la forme de l'animal et/ou la couleur de l'animal et/ou la couleur prédominante de l'animal et/ou le motif du pelage.

3. Dispositif selon l'une des revendications 1 à 2, **caractérisé en ce que**
le dispositif comprend un dispositif de lecture (11) pour lire un code, qui est stocké dans un support de données fixé à l'animal.

4. Dispositif selon l'une des revendications 1 à 3, **caractérisé en ce que**
le dispositif comprend un capteur d'odeur (7) pour déterminer une odeur du premier animal, l'odeur du premier animal étant comparée à une odeur de référence stockée sous la forme de données de référence.

5. Dispositif selon l'une des revendications 1 à 4, **caractérisé en ce que**
le dispositif comprend un dispositif de verrouillage pour verrouiller la porte (4).
